**Europäisches Patentamt**

**European Patent Office**

**Office européen des brevets**

(11) Publication number: **0 134 990**
**B1**

# (12) EUROPEAN PATENT SPECIFICATION

(45) Date of publication of patent specification: **28.10.87**

(21) Application number: **84108060.9**

(22) Date of filing: **10.07.84**

(51) Int. Cl.⁴: **G 01 F 1/00**

(54) Method and instruments to measure the flow rate in sewer systems.

(30) Priority: **14.07.83 IT 1257883**

(43) Date of publication of application:
**27.03.85 Bulletin 85/13**

(45) Publication of the grant of the patent:
**28.10.87 Bulletin 87/44**

(84) Designated Contracting States:
**AT BE CH DE FR GB LI LU NL SE**

(56) References cited:
**EP-A-0 081 049**
**DE-A-1 958 405**
**DE-A-3 239 920**
**FR-A-2 499 241**

(73) Proprietor: **CERPAM S.r.l.**
**Via Cardinal Mistrangelo 7**
**I-17100 Savona (IT)**

(72) Inventor: **Beriolo, Giorgio**
**Via Cardinal Mistrangelo No. 7**
**I-17100 Savona (IT)**
Inventor: **Sirito, Giorgio**
**Via Cardinal Mistrangelo No. 7**
**I-17100 Savona (IT)**

(74) Representative: **Ferrarotti, Giovanni**
**Studio Consulenza Tecnica Dr. Ing. Giovanni**
**Ferrarotti Via Alla Porta Degli Archi 1/7**
**I-16121 Genova (IT)**

Courier Press, Leamington Spa, England.

## Description

The invention relates to a method and apparatus to measure the flow rate of sewage in a sewer system.

With the enforcement of the Italian Act n° 319 dated April 30, 1976 "Regulations to safeguard the environment and waters from pollution" it became increasingly necessary to gain an exact knowledge about the exact sewerage volume involving the sewer systems and especially the intercepting header or main collector for an improved design and operation of the clarification plants.

The problem is a relatively new one, especially for Public Agencies which so far measured the sewerage volume and flow rate only occasionally in the collecting system using empirical methods. The measuring problem is also one of the most difficult to solve due to the heterogenous qualitative and quantitative nature of the waste waters containing all kinds of pollutants, even of macroscopic size, and with a very wide minimum and maximum range.

It was thus found that known flow rate and volume measuring systems and instruments, manufactured by firms specializing in facilities and instruments for municipal water systems, could either not be used or involved great difficulties.

These facilities mainly include:

— current-type flowmeters, which cannot be used in sewer systems, since the propeller stops paper and rags and would cause clogging of the sewer in only a few minutes;

— magnetic volume meters which can be used in full cross sections, but their accuracy decreases with a decreasing flow rate, with considerable percentage errors on minimum volume values.

Furthermore the utilization of these devices requires cleaning of the sewer pipes, to clean the sensors periodically and to remove grease and detergents. They must therefore be included in the non applicable instruments.

— Venturi meters are perhaps the only instruments that can be used for this purpose. However, when mounted in channels they cause backup entailing deposits in the sewer system. The utilization of these Venturi meters is more advisable in pressurized ducts. However, since pressure sewer pipe lines are subject to "free level tailrace", they may give rise to malfunctioning. Special steps must also be taken to ensure backwash and to prevent the measuring tubes from clogging.

Finally, all these systems require cutting of the sewer pipes to insert the special measuring device (whether Venturi tube or magnetic sensor), often without any possibility to by-pass the duct and operating difficulties which can be easily imagined.

Furthermore, the installation of this measuring equipment also involves considerable costs for masonry work (underground catch pits, instrument building) in zones where road traffic hinders their execution.

A measuring system for measuring the amount of fluids issuing from a rubbish dump, relying on measurement of the time of filling of a measuring container, is disclosed in DE—A—3 239 920 which was published after the priority date of the present application. Similar flow measuring systems are also disclosed in DE—A—1 958 405, FR—A—2 499 241 and EP—A—0 081 049.

To eliminate the drawbacks of the currently known measuring sytems, the object of the invention is to provide an improved sewage flow rate measuring system.

This object is achieved by the method according to Claim 1 and the apparatus according to Claim 2.

The method is accurate and the apparatus required for its implementation is very simple and not expensive, also in view of the fact that surge tanks in which the sewerage is pumped are usually incorporated in sewer systems.

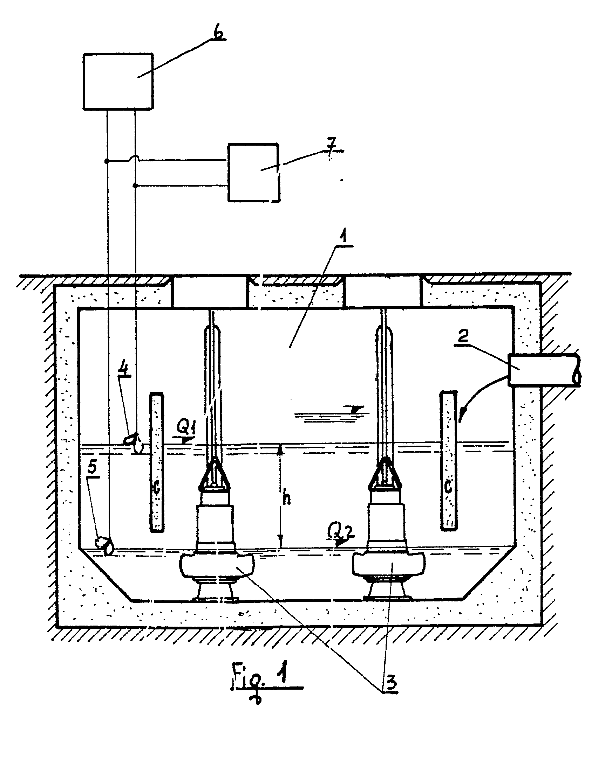

The invention in question is illustrated in an exemplified implementation which makes it possible to measure the sewerage volume with the above mentioned method, in Fig. 1, of the enclosed drawing. In this figure, a normal sewer surge tank 1 with pumping system is continuously receiving sewerage from the sewer system 2. One or more, preferably submersible, pumps 3 are installed in the tank. Furthermore a maximum level float or sensor 4 and a minimum level float or sensor 5 are respectively provided to define the maximum height Q1 and the minimum height Q2 of the sewage in the tank.

The pumping system is intermittently working; the maximum level float or sensor 4 starts the pump(s) (if more floats or sensors are used, the lowest maximum level float will actuate the first pump). After the pumps have been started, the liquid level in the tank will drop (if several pumps are used and the sewage flow is exceeding the capacity of the first pump, the level will rise until the float or sensor actuates the second or third pump, and so on, until the liquid level starts lowering), down to the minimum level allowed by the minimum level float or sensor 5, which will stop all pumps.

The liquid will then rise once more until it reaches the first maximum level gauge 4 and the cycle restarts in the above described intermittence, thus alternating rest and working periods of the pump(s).

The variation in height of the liquid surface in the tank is therefore well defined and constant, depending on the float or sensor level and shall therefore be exactly measured, once and for all.

The surface area S of the tank is also fixed. This tank is usually a reinforced concrete structure with vertical walls. Any internal components, such as diaphragms separating settling zones etc. or filling up for bottom slopes or inclination of the walls within the range of 'h' will be known and remain constant. They will be indicated by "C".

Therefore the filling and emptying volume of the tank are known and can be expressed by:

$$V = h \times S - C$$

which value is constant.

Subsequent pump starting and stopping signals will be applied to the terminals of the pump panel and to inform a computer 7 whenever a pump is started or stopped by means of an interfacing system.

The computer is fitted with an internal clock and will provide for calculation of the following data:

a) filling time;

b) delivery rate in liters per second

c) the average hourly flow rate in liters per second, calculated as the weighted means of the measured values, while specifying the number of connections and disconnections of the pump during the hour in question;

d) at the end of the day:

— the average daily flow rate in liters per second

— the maximum peak delivery in liters per second in the related hour

— the maximum peak coefficient

— the minimum daily flow rate in liters per second in any one hour;

— the overall daily flow rate in m³/day while also providing at the end of the day for plotting of an hourly average flow rate graph;

The computerized automatic system has output signals that can be remote transmitted and can supply delivery data to a chemical additive metering pump (e.g. hypochlorite) while creating an electronic file on a mass memory such as for instance a magnetic support or floppy disc. According to the description, the floats or sensors are controlling at the same time both the pumps and the computer, though obviously two maximum level floats or sensors and two minimum floats or sensors can be actuated at the related Q1 and Q2 levels, thus separately controlling the pumps and the computer. This second approach is recommended since it will prevent the computer from being disturbed by the pump relays.

## Claims

1. Method of measuring sewage flow rate in a sewerage system comprising:

— allowing sewage to fill a surge tank of the sewerage system up to a maximum level ($Q_1$) sensed by a float or other level sensor, said tank being fitted with a plurality of pumps for evacuating said tank;

— on said sewage reaching said maximum level, starting at least one of the pumps of said surge tank and continuing pumping sewage out of said tank until the sewage reaches a minimum level ($Q_2$), said minimum level ($Q_2$) also being measured by a float or other level sensor;

— on said sewage reaching said minimum level ($Q_2$), stopping said pumps to allow sewage entering said tank to fill it to said maximum level ($Q_1$);

— measuring the time intervals, by means of the timer of a computer, for said sewage to fill said tank i.e. the time intervals when said pump(s) are switched off; and

— operating said computer to use said measured time intervals and the known volume V of said tank, calculated from $V = Sh - C$, where S is the horizontal cross-sectional area of said tank, h is the difference in height between said maximum and minimum levels and C is the volume of other structures in said tank between the maximum and minimum levels, to calculate the flow rate of sewage over a period of time.

2. Sewage flow rate measuring system arranged to perform the method of Claim 1 comprising:

— a surge tank (1) of a sewerage system, said tank having an inlet (2) and at least one evacuating pump (3) for pumping sewage out of said tank;

— floats or other level sensors (4, 5) for sensing sewage reaching maximum (Q1) and minimum (Q2) levels in said tank;

— means responsive to said sensors for starting said pump or pumps when sewage reaches said maximum level and for stopping said pump (3) when it reaches said minimum level;

— a computer (7) provided with timing means and arranged to calculate the flow rate of sewage passing through said tank over a period of time using the measured time intervals when the pumps are switched off and the volume V, of said tank, as defined in Claim 1.

3. Method of Claim 1 wherein the same sensor(s) control(s) the pump(s) and the computer or wherein individual sensors respectively control the pump(s) and the computer.

4. Method of Claim 1 wherein a plurality of maximum level sensors is provided and wherein pumping is started when sewage reaches the actuation level of the lowest of said maximum level sensors.

5. Method of Claim 1 wherein said computer (7) is arranged to control the delivery of chemical additive, such as hypochlorite, to said sewage in accordance with said measured flow rate.

## Patentansprüche

1. Verfahren zum Messen des Durchflusses in Abwassersystemen, gekennzeichnet durch folgende Verfahrensschritte:

— ein Zwischenbehälter des Abwassersystems wird mit Abwasser bis zu einem maximalen Flüssigkeitsstand ($Q_1$) gefüllt, was durch einen Schwimm- oder sonstigen Flüssigkeitsstandsmeßfühler abgetastet wird, wobei der Behälter mit einer Mehrzahl von Pumpen zum Entleeren des Behälters versehen ist;

— bei Erreichen des maximalen Flüssigkeitsstandes wird mindestens eine der Pumpen eingeschaltet und Abwasser aus dem Behälter gepumpt bis es einen minimalen Flüssigkeitsstand ($Q_2$) erreicht hat, der ebenfalls durch einen Schwimm- oder sonstigen Flüssigkeitsstandmeßfühler gemessen wird;

— bei Erreichen des minimalen Flüssigkeits-

standes ($Q_2$) werden die Pumpen abgeschaltet, um dem Abwasser zu ermöglichen, in den Behälter zu strömen und ihn bis zum maximalen Flüssigkeitsstand ($Q_1$) zu füllen;

— mittels des Zeitmessers eines Computers werden die Zeitintervalle gemessen, die zur Füllung des Behälters erforderlich sind, das sind die Zeitintervalle in denen die Pumpe(n) abgeschaltet ist (sind); und

— es wird der Computer betätigt, um aus den gemessenen Zeitintervallen und dem bekannten Volumen V des Behälters die Durchflußmenge während eines Zeitabschnittes zu errechnen, wobei das Volumen errechnet wird aus $V = Sh - C$ mit $S$ = horizontaler Querschnitt des Behälters, $h$ = Höhenunterschied zwischen maximalem und minimalem Flüssigkeitsstand, $C$ = Volumen anderer Bauelement zwischen maximalem und minimalem Flüssigkeitsstand.

2. Durchflußmeßsystem zur Durchführung des Verfahrens nach Anspruch 1, gekennzeichnet durch

— einen Zwischenbehälter (1) eines Abwassersystems, der einen Einlaß (2) und mindestens eine Entleerungspumpe (3) zum Pumpen von Abwasser aus dem Behälter aufweist;

— Schwimm- oder sonstige Flüssigkeitsstandsmeßfühler (4, 5), die abtasten, ob das Abwasser den maximalen oder minimalen Flüssigkeitsstand erreicht;

— auf die Meßfühler ansprechende Organe zum Einschalten der Pumpe oder Pumpen wenn das Abwasser den maximalen Flüssigkeitsstand erreicht hat, und zum Ausschalten der Pumpe (3) wenn es den minimalen Flüssigkeitsstand erreicht hat;

— einen Computer (7), der mit Zeitmeßorganen ausgestattet und so ausgebildet ist, daß er aus den gemessenen Zeitintervallen, während der die Pumpen ausgeschaltet sind, und dem in Anspruch 1 definierten Volumen V des Behälters die während eines Zeitabschnittes den Behälter durchströmende Menge an Abwasser errechnet.

3. Verfahren nach Anspruch 1, dadurch gekennzeichnet, daß der (die) selbe(n) Meßfühler die Pumpe(n) und den Computer steuert (steuern) oder daß individuelle Meßfühler die Pumpe(n) bzw. den Computer steuern.

4. Verfahren nach Anspruch 1, dadurch gekennzeichnet, daß eine Mehrzahl von Maximum-Flüssigkeitsstandsmeßfühlern angeordnet sind und das Pumpen begonnen wird, wenn das Abwasser den Ansprechstand des untersten der Maximum-Flüssigkeitsstandsmeßfühler erreicht.

5. Verfahren nach Anspruch 1, dadurch gekennzeichnet, daß der Computer so ausgebildet ist, daß er die Zugabe von Chemikalien, z.B. Hypochlorite, zum Abwasser in Abhängigkeit von der gemessenen Durchflußmenge steuert.

**Revendications**

1. Procédé de mesure du débit des eaux usées dans un système d'égouts comprenant:

— le remplissage d'une cuve d'équilibre du système d'égouts par les eaux usées jusqu'à un niveau maximal (Q1) détecté par un flotteur ou autre capteur de niveau, ladite cuve étant équipée d'une pluralité de pompes destinées à la vider;

— lorsque ledit niveau maximal d'eaux usées est atteint, le démarrage d'au moins une des pompes de ladite cuve d'équilibre, et le pompage continu des eaux usées en dehors de ladite cuve jusqu'à ce que les eaux usées atteignent un niveau minimal (Q2), ledit niveau minimal (Q2) étant également mesuré par un flotteur ou autre capteur de niveau;

— lorsque ledit niveau minimal (Q2) des eaux usées est atteint, l'arrêt desdites pompes pour permettre aux eaux usées d'entrer dans ladite cuve et de la remplir jusqu'audit niveau maximal (Q1);

— la mesure des intervalles de temps, au moyen de la minuterie d'un ordinateur, nécessaire auxdites eaux usées pour remplir ladite cuve, c'est-à-dire les intervalles de temps pendant lesquels la ou lesdites pompes sont arrêtées; et

— l'utilisation dudit ordinateur pour tirer partie desdits intervalles de temps mesurés et du volume connu V de ladite cuve, calculé à partir de $V = Sh - C$, où $S$ est la surface horizontale de la section transversale de ladite cuve, $h$ la différence de hauteur entre lesdits niveaux maximal et minimal et $C$ le volume des autres structures contenues dans ladite cuve entre les niveaux maximal et minimal, afin de calculer le débit des eaux usées pendant une période de temps.

2. Système de mesure du débit des égouts organisé pour appliquer le procédé de la revendication 1, comprenant:

— une cuve d'équilibre (1) à système d'égouts, ladite cuve ayant une entrée (2) et au moins une pompe de vidange (3) destinée à pomper les eaux usées en dehors de ladite cuve;

— des flotteurs ou autres capteurs de niveau (4, 5), pour détecter le moment où les eaux usées atteignent les niveaux maximal (Q1) et maximal (Q2) dans ladite cuve;

— des moyens répondant auxdits capteurs pour mettre en marche la ou lesdites pompes lorsque les eaux usées atteignent ledit niveau maximal et pour arrêter ladite pompe (3) lorsqu'elles atteignent ledit niveau minimal;

— un ordinateur (7) équipé de moyens de base de temps et agencés pour calculer le débit des eaux usées passant par ladite cuve au cours d'une période de temps en utilisant les intervalles de temps mesurés pendant lesquels les pompes sont arrêtées et le volume V de ladite cuve, tels qu'il a été défini à la revendication 1.

3. Procédé selon la revendication 1, dans lequel le ou les même(s) capteur(s) commande(nt) la ou les pompe(s) et l'ordinateur ou dans lequel des capteurs individuels commandent respectivement la ou les pompe(s) et l'ordinateur.

4. Procédé selon la revendication 1, dans lequel une pluralité de capteurs de niveau minimal sont installés et dans lequel le pompage est démarré

7 0 134 990 8

quand les eaux usées atteignent le niveau de déclenchement du plus bas desdits capteurs de niveau maximal.

5. Procédé selon la revendication 1, dans lequel ledit ordinateur (7) est installé pour commander l'application d'un additif chimique, tel que de l'hypochloride, auxdites eaux usées, en fonction dudit débit mesuré.

Fig. 1